# EUROPÄISCHE PATENTSCHRIFT

(11) **EP 2 818 798 B1**
(45) Veröffentlichungstag und Bekanntmachung des Hinweises auf die Patenterteilung: **19.10.2016**
(21) Anmeldenummer: 14001966.2
(22) Anmeldetag: 06.06.2014
(51) Int. Cl.: F23R 3/28, F23C 99/00, F23N 5/00

(54) **Hochfrequenzstabilisierte Verbrennung in Fluggasturbinen**
High frequency stabilised combustion in aviation gas turbines
Combustion stabilisée à haute fréquence dans des turbines à gaz volatile

(30) Priorität: 27.06.2013 DE 102013010706
(43) Veröffentlichungstag der Anmeldung: 31.12.2014
(73) Patentinhaber: Airbus Defence and Space GmbH, 85521 Ottobrunn (DE)
(72) Erfinder: Steinwandel, Jürgen, Dr., 88690 Uhldingen-Mühlhofen (DE); Stuhlberger, Johannes, 81369 München (DE)
(74) Vertreter: Kopf Westenberger Wachenhausen Patentanwälte PartG mbB

(56) Entgegenhaltungen:
- EP-A1- 2 107 305
- EP-A2- 1 225 392
- EP-A2- 2 366 951
- WO-A1-2012/145836
- US-A- 5 370 525
- US-A- 5 617 717

## Beschreibung

### Technisches Gebiet

Die Erfindung betrifft eine Gasturbine mit einer Mikrowellenquelle, ein Luftfahrzeug mit einer Gasturbine, eine Verwendung einer Mikrowellenquelle zum Erzeugen einer Mikrowellenstrahlung für eine Antriebsvorrichtung, eine elektronische Steuerung für eine Gasturbine, ein Verfahren zum Steuern einer Gasturbine.

### Technischer Hintergrund

Eine Anforderung an Gasturbinen, insbesondere an Fluggasturbinen, ist ein verbrauchsgünstiger und emissionsarmer Betrieb. Eine Möglichkeit hierfür ist ein Betrieb der Gasturbine mit möglichst hohem Luftüberschuss, d.h. ein Magerbetrieb.

Ein möglicher Weg für den Magerbetrieb besteht in einer gestuften Verbrennung. Hier kann über eine Pilotflamme mit nachfolgender Einspritzung der Haupt-Kraftstoffmenge eine bessere Homogenisierung erreicht und infolge der intermediären Verbrennungsspezies aus der Pilotflamme eine Abmagerung ermöglicht werden. Die Pilotflamme kann dabei eine Kerosinflamme, eine Wasserstoffflamme oder auch eine plasmaunterstützte Flamme sein. Das Bereitstellen einer gestuften Verbrennung kann eine verlängerte Brennkammer erfordern.

Die EP 2 366 951 A2 betrifft eine Vorrichtung zum Zuführen von elektromagnetischer Strahlung in eine Brennkammer während des Verbrennungsprozesses. Eine elektromagnetische Strahlungsquelle führt die elektromagnetische Strahlung mittels eines ersten Wellenleiters zu einem zweiten Wellenleiter, der einen Ausgang für die elektromagnetische Strahlung aufweist, der derart positioniert ist, dass die elektromagnetische Strahlung in das Innere der Brennkammer geführt wird, um die Erzeugung von Kohlenmonoxiden und von unverbrannten Kohlenmonoxiden zu reduzieren.

Die EP 1 225 392 A2 betrifft eine Mischvorrichtung einer Brennkammer einer Gasturbine. Die Mischvorrichtung weist eine Brennstoffdüse auf, innerhalb welches ein Plasmagenerator angeordnet ist, um dissoziierten oder ionisierten Brennstoff zu erzeugen.

### Zusammenfassung der Erfindung

Es ist Aufgabe der Erfindung, den Treibstoffverbrauch von Gasturbinen zu reduzieren.

Die Aufgabe wird gelöst durch durch den Gegenstand des unabhängigen Anspruchs 1.

Weiterbildungen und Ausführungsformen sind der nachfolgenden Beschreibung zu entnehmen.

Nachfolgend wird ein Betrieb mit hohem Luftüberschuss des Kraftstoff-Luft-Gemisches auch als Magerbetrieb bezeichnet. Das Kraftsoff-Luft-Verhältnis, bei welchem die Verbrennung in der Brennkammer ohne Einleiten von Mikrowellen oder andere Maßnahmen erlischt, wird nachfolgend als magere Löschgrenze bezeichnet.

Es wird eine Gasturbine vorgeschlagen, wobei die Gasturbine eine Brennkammer mit einem Hohlraum zum Aufnehmen und Verbrennen eines Kraftstoff-Luft-Gemisches aufweist. Weiterhin weist die Gasturbine eine Mikrowellenquelle zum Erzeugen von Mikrowellenstrahlung auf, wobei die Gasturbine dazu ausgeführt ist, die Mikrowellenstrahlung in den Hohlraum der Brennkammer zu leiten, um die Verbrennung des Kraftstoff-Luft-Gemisches in der Brennkammer zu unterstützen.

Bei der Brennkammer handelt es sich um eine Ringbrennkammer welche sich ringförmig um das Triebwerk erstreckt.

Nachfolgend kann der Begriff "Mikrowellenquelle" auch eine Hochfrequenzquelle zum Erzeugen von elektromagnetischer Strahlung bezeichnen. Die Mikrowellenquelle kann z.B. ein Magnetron, eine Klystronröhre, eine Gunndiode oder eine IMPATT-Diode sein. Als Mikrowellenquellen können beispielsweise Standardbauteile zur Erzeugung von Mikrowellen verwendet werden. Ein Magnetron kann z.B. Mikrowellen im Bereich von 0.9 bis 25 GHz erzeugen.

Dabei befindet sich die Mikrowellenquelle außerhalb der Brennkammer. Weiterhin kann sich die Mikrowellenquelle außerhalb der Gasturbine befinden, wobei die erzeugte Mikrowellenstrahlung zur Brennkammer der Gasturbine geleitet wird.

Durch das Einleiten der Mikrowellenstrahlung in den Hohlraum der Brennkammer wird das Aufrechterhalten eines Magerbetriebs ermöglicht. Mit anderen Worten wird eine Verbrennung in der Brennkammer ermöglicht, wobei der Luftanteil im Kraftstoff-Luft-Gemisch hoch ist.

Die eingeleitete Mikrowellenstrahlung kann eine Ankoppelung von Ionen, Elektronen und/oder neutralen Verbrennungsfragmenten, z.B. OH, CH, CH2, bewirken. Dadurch kann eine Aufrechterhaltung einer Verbrennungsreaktion an einer mageren Löschgrenze ermöglicht werden.

Durch die eingeleitete Mikrowellenstrahlung wird den Ionen, Elektronen und/oder den Verbrennungsfragmenten Energie zugeführt, wodurch der Brennstoff aktiviert wird. Die Moleküle absorbieren die Energie und sind aktiviert, wodurch die Verbrennung unterstützt und/oder beschleunigt wird. Beispielsweise werden die Moleküle durch Rotationsenergie aktiviert, in Rotation und/oder Schwingung versetzt, so dass die Verbrennungsreaktion an der mageren Löschgrenze ermöglicht wird.

Gemäß der Erfindung ist die Mikrowellenquelle außerhalb der Brennkammer angeordnet.

Durch das Anordnen der Mikrowellenquelle außerhalb der Brennkammer wird die Mikrowellenquelle nicht der hohen Hitze, welche in der Brennkammer vorherrscht, ausgesetzt. Dadurch kann es beispielsweise möglich sein, ein Standardbauteil als Mikrowellenquelle zu verwenden.

Gemäß der Erfindung weist die Brennkammer ein mikrowellendurchlässiges Fenster auf, welches dazu ausgeführt ist, die Mikrowellenstrahlung in den Hohlraum der Brennkammer einzulassen.

Das mikrowellendurchlässige Fenster besteht beispielsweise aus Keramik, Quarz, Al203, Saphir, oder einer Kombination dieser Materialien.

Durch das Vorsehen eines mikrowellendurchlässigen Fensters werden beispielsweise ein Anbringen der Mikrowellenquelle außerhalb der Brennkammer und/oder ein Einleiten der Mikrowellenstrahlung in den Hohlraum der Brennkammer ermöglicht. Beispielsweise weist die Brennkammer mehrere mikrowellendurchläßige Fenster auf, welche ringförmig um eine Rotationsachse der Gasturbine an der Brennkammer angeordnet sind.

Gemäß einer weiteren Ausführungsform der Erfindung weist die Gasturbine eine Hornantenne zum Ausstrahlen der Mikrowellenstrahlung in den Hohlraum der Brennkammer auf.

Die Hornantenne ist beispielsweise an die Mikrowellenquelle angeschlossen oder mit der Mikrowellenquelle verbunden. Weiterhin kann sich die Hornantenne außerhalb der Brennkammer an einem mikrowellendurchlässigen Fenster befinden, so dass die Hornantenne die Mikrowellenstrahlung in den Hohlraum der Brennkammer ausstrahlen kann.

Gemäß einer weiteren Ausführungsform der Erfindung weist die Gasturbine einen Hohlleiter zum Leiten der Mikrowellenstrahlung von der Mikrowellenquelle an oder in die Brennkammer auf.

Dadurch wird ermöglicht, dass die Mikrowellenquelle eine gewisse Entfernung zur Brennkammer aufweist. Beispielsweise kann die Mikrowellenquelle 10 - 30 cm von der Brennkammer entfernt sein. Die Mikrowellenstrahlung kann mit dem Hohlleiter von der Mikrowellenquelle an die Brennkammer geleitet werden und vom Hohlleiter in den Hohlraum der Brennkammer ausgestrahlt werden. Weiterhin kann die Mikrowellenstrahlung durch einen Hohlleiter zu einer Hornantenne geleitet und von der Hornantenne in den Hohlraum der Brennkammer ausgestrahlt werden.

Gemäß einer weiteren Ausführungsform der Erfindung weist die Gastrubine eine Mehrzahl an Mikrowellenquellen auf, welche ringförmig um eine Rotationssymmetriesachse der Gasturbine angeordnet sind.

Die ringförmige Anordnung der Mikrowellenquellen kann beispielsweise eine Anordnung der Mikrowellenquellen auf einer Kreisbahn beschreiben. Der Mittelpunkt dieser Kreisbahn ist z.B. durch eine Rotationsachse einer Antriebswelle der Gasturbine definiert.

Beispielsweise weist die Gasturbine 8 Mikrowellenquellen auf, welche ringförmig, von der Rotationsachse aus gesehen außerhalb der Brennkammer, angeordnet sind.

Gemäß einer weiteren Ausführungsform der Erfindung ist die Mikrowellenquelle dazu ausgeführt, die Mikrowellenstrahlung mit einer Frequenz zwischen 1 und 100 GHz zu erzeugen.

Gemäß einer weiteren Ausführungsform der Erfindung ist die Mikrowellenquelle zum Erzeugen einer gepulsten Mikrowellenstrahlung ausgeführt.

Die gepulste Mikrowellenstrahlung wird von den Brennstoffmolekülen und/oder den Sauerstoffmolekülen absorbiert. Die durch die gepulsten Mikrowellen zugeführte Energie wird absorbiert und die Moleküle in Schwingung und/oder Rotation versetzt, so dass die Verbrennungsreaktion an der mageren Löschgrenze ermöglicht ist.

Gemäß einer weiteren Ausführungsform der Erfindung ist die Gasturbine eine Fluggasturbine.

Ferner betrifft die Erfindung ein Luftfahrzeug mit einer oben und im Folgenden beschriebenen Gasturbine.

Das Luftfahrzeug kann beispielsweise ein Flugzeug oder einen Hubschrauber sein.

Weiter betrifft die Erfindung die Verwendung einer Mikrowellenquelle zum Erzeugen einer Mikrowellenstrahlung, wobei die Mikrowellenstrahlung in einen Hohlraum einer Brennkammer einer Antriebsvorrichtung eines Luftfahrzeugs geleitet wird.

Die Antriebsvorrichtung bezieht sich beispielsweise auf eine Gasturbine, auf einen Motor zum Antrieb eines Propellers oder auf ein Turboprop-Triebwerk.

Die beschriebenen Ausführungsformen betreffen gleichermaßen eine Gasturbine, und ein Luftfahrzeug mit einer Gasturbine, unabhängig davon, ob einzelne Ausführungsformen ausschließlich in Bezug mit einer Gasturbine beschrieben sind.

Weitere Merkmale, Vorteile und Anwendungsmöglichkeiten der Erfindung ergeben sich aus der nachfolgenden Beschreibung der Ausführungsbeispiele und Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen.

Kurze Beschreibung der Figuren
Fig. 1 zeigt eine Gasturbine gemäß eines Beispiels, welches nicht Teil der Erfindung ist.
Fig. 2 zeigt eine Anordnung mit einer Gasturbine sowie einem Steuergerät.
Fig. 3 zeigt ein Verfahren, welches nicht Teil der Erfindung ist.
Fig. 4 zeigt ein Flugzeug gemäß einem weiteren Ausführungsbeispiel der Erfindung.
Fig. 5 zeigt einen Teil einer Gasturbine gemäß der Erfindung.
Fig. 6 zeigt einen Teil einer Gasturbine gemäß der Erfindung.
Fig. 7 zeigt einen Teil einer Gasturbine gemäß einem weiteren Ausführungsbeispiel der Erfindung.

Die Figuren sind schematisch und nicht maßstabsgetreu. Sind in der nachfolgenden Beschreibung in verschiedenen Figuren die gleichen Bezugszeichen angegeben, so bezeichnen diese gleiche oder ähnliche Elemente. Gleiche oder ähnliche Elemente können aber auch mit unterschiedlichen Bezugszeichen bezeichnet sein.

### Detaillierte Beschreibung von Ausführungsbeispielen

In einer Brennkammer eines Gastriebwerks, kann eine Flamme, welche sich strömungsabwärts des Eintritts von Luft und Brennstoff ausbildet, eine Vorverdampfung von flüssigem Brennstoffs bewirken. Diese Vorverdampfung des flüssigen Brennstoffs kann in einer Teilvormischung und/oder Teilhomogenität eines Kraftstoff-Luftgemisches resultieren. Damit kann die maximal auftretende Temperatur der Brennkammer geringer sein als die Temperatur bei Diffusionsflammen, was eine Reduktion der Stickoxide zur Folge haben kann. Bei hoher Abmagerung, d.h. bei einem hohen Luftanteil im Kraftstoff-Luft-Gemisch kann es jedoch zum Erlöschen der Flamme kommen.

Eine reduzierte Temperatur der Brennkammer kann zu einer Reduktion der Stickoxide führen. Insbesondere können Zeldovich-Stickoxide und prompte Stickoxide reduziert werden. Brennstoff-Stickoxide können unbeeinflusst bleiben. Andererseits können Anteile von unverbrannten Kohlenwasserstoffen sowie Kohlenstoffoxiden zunehmen, wodurch der Betriebsbereich des Krafstoff-Luft-Verhältnisses eingeschränkt werden kann. Dies kann auf eine schlechtere Reaktionskinetik infolge reduzierter Temperatur zurückzuführen sein, da die Reaktionsgeschwindigkeit proportional zur Exponentialfunktion der inversen Temperatur ist. Folglich kann bei hohem Luftüberschuss und bei geringer Flammentemperatur die Reaktionsgeschwindigkeit reduziert sein und somit kann die Verbrennung erlöschen.

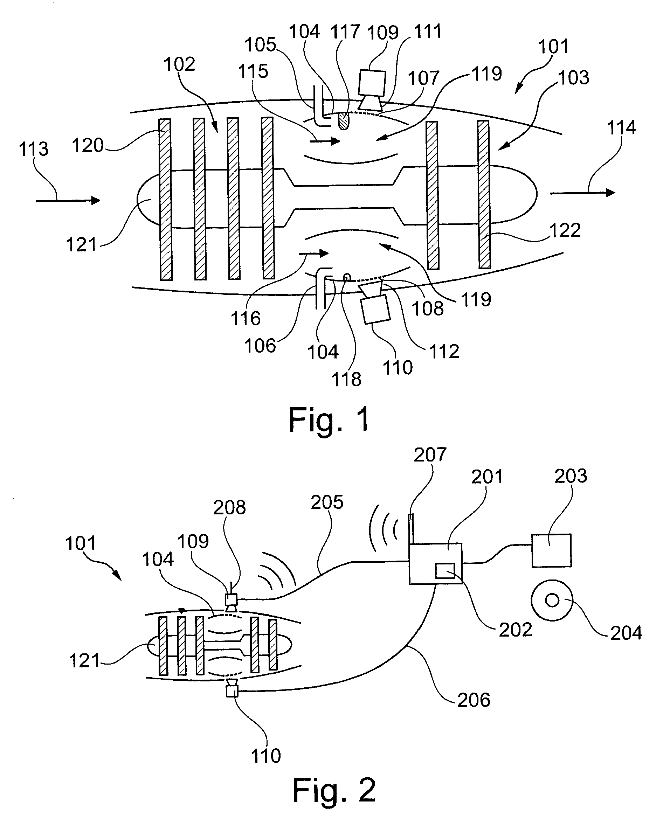

Fig. 1 zeigt einen Querschnitt einer Gasturbine 101. Die Gasturbine weist einen Kompressor 102 auf, welcher dazu ausgeführt ist, die einlaufende Luft zu verdichten und anschließend in die Brennkammer 104 zu leiten. Der Kompressor 102 beinhaltet mehrere Laufräder 120 mit Kompressorschaufeln, wobei die Laufräder 120 axial an einer Antriebswelle 121 befestigt sind. Weiterhin weist die Gasturbine eine Brennkammer 104 auf, die beispielsweise ringförmig hinter dem Kompressor 102 angebracht ist. In der Brennkammer 104 befindet sich der Hohlraum der Brennkammer 119 in welchem die Verbrennung des Kraftstoff-Luft-Gemisches stattfindet. Die Brennkammer 104 weist weiterhin eine erste Düse 105 sowie eine zweite Düse 106 zur Zufuhr von Kraftstoff, beispielsweise Kerosin, auf. Zur Entzündung des Kraftstoff-Luft-Gemisches in der Brennkammer 104 weist die Brennkammer 104 weiterhin eine erste Zündkerze 117 sowie eine zweite Zündkerze 118 auf. Zum Einlassen von Mikrowellenstrahlung in die Brennkammer 104 weist die Brennkammer weiterhin ein erstes mikrowellendurchlässiges Fenster 107 sowie ein zweites mikrowellendurchlässiges Fenster 108 auf. Außerhalb der Brennkammer 104 ist eine erste Mikrowellenquelle 109 mit einer Hornantenne 111 sowie eine zweite Mikrowellenquelle 110, welche die Mikrowellenstrahlung mit einem Hohlleiter 112 zur Brennkammer leitet. Die Hornantenne 111 und der Hohlleiter 112 sind jeweils beim ersten und zweiten mikrowellendurchlässigen Fenster 107 und 108 angeordnet. Die Gasturbine kann weitere Düsen, Zündkerzen, mikrowellendurchläßige Fenster und Mikrowellenquellen aufweisen, welche ringförmig um die Antriebswelle 121 angeordnet sind. Hinter der Brennkammer 104 befindet sich die Turbine 103, welche Laufräder 122 aufweist, welche axial mit der Antriebswelle 121 verbunden sind.

Durch die Rotation der Laufräder 120 des Kompressors 102 wird Luft eingesogen, was durch den Pfeil 113 dargestellt ist. Die vom Kompressor 102 komprimierte Luft, welche in die Brennkammer 104 geleitet wird, ist durch die Pfeile 115 und 116 dargestellt. Im Hohlraum 119 der Brennkammer 104 wird der komprimierten Luft durch die Düsen 105 und 106 Kraftstoff zugeführt. Das resultierende Kraftstoff-Luft-Gemisch wird durch die Zündkerzen 117 und 118 entzündet. Zur Unterstützung der Verbrennung erzeugen die Mikrowellenquellen 109 und 110 Mikrowellenstrahlung, welche von der Hornantenne 111 bzw. vom Hohlleiter 112 durch die Fenster 107 und 108 in den Hohlraum gestrahlt werden. Die Gase der Verbrennung des Kraftstoff-Luft-Gemisches werden anschließend zur Turbine 103 zum Antrieb der Gasturbine und anschließend aus der Gasturbine 101 heraus geleitet, was durch den Pfeil 114 dargestellt ist.

Fig. 2 zeigt eine Gasturbine 101 mit einer Brennkammer 104, wobei außerhalb der Brennkammer eine erste Mikrowellenquelle 109 und eine zweite Mikrowellenquelle 110 positioniert ist.

Weiterhin ist ein Steuerungsgerät 201 gezeigt, welches einen Prozessor 202 aufweist. Das Steuerungsgerät ist mit einer ersten Leitung 205 mit der ersten Mikrowellenquelle 109 verbunden und mit einer zweiten Leitung 206 mit der zweiten Mikrowellenquelle 110 verbunden. Weiterhin weist das Steuerungsgerät eine Antenne 207 und die erste Mikrowellenquelle eine zweite Antenne 208 auf, so dass die erste Mikrowellenquelle 109 und das Steuergerät 201 über Funk Daten austauschen können. Das Steuergerät 201 ist dazu ausgeführt, über die Leitungen 205 und 206 sowie über die Funkverbindung mit den Antennen 207 und 208 die Mikrowellenquellen 109 und 110 zu steuern. Weiterhin ist das Steuergerät 201 an ein Lesegerät 203 für ein computerlesbares Medium 204, zum Beispiel eine CD, angeschlossen.

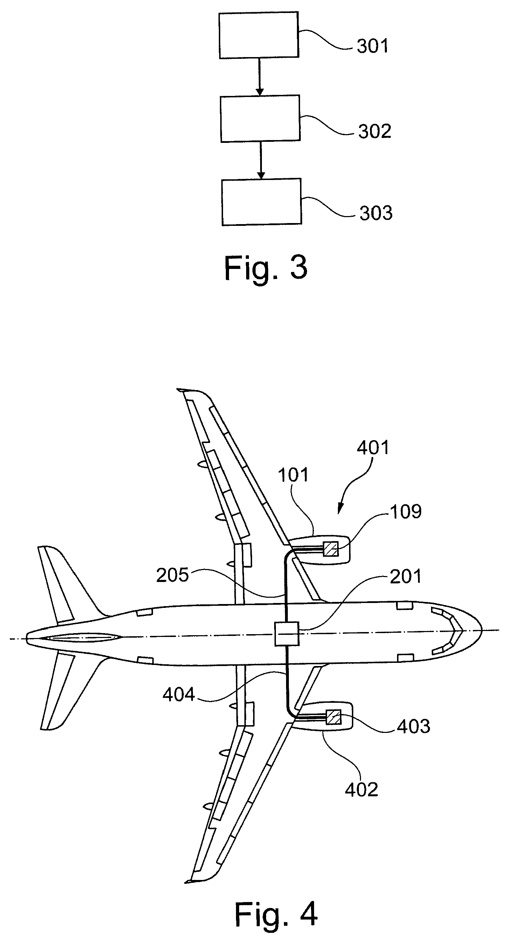

Fig. 3 zeigt ein Flussdiagramm für ein Verfahren, welches nicht Teil der Erfindung ist. Das Verfahren weist einen Schritt 301 zum Ermitteln eines physikalischen Parameters, beispielsweise des Sauerstoffgehalts von Abgasen, welche von der Gasturbine emittiert werden, der Flughöhe oder dem Wirkungsgrad der Gasturbine, sowie einen Schritt 302 zum Regeln einer Mikrowellenquelle in Abhängigkeit des ermittelten Sauerstoffgehalts der Abgase auf. Weiterhin weist das Verfahren einen Schritt 303 zum Einleiten der Mikrowellenstrahlung in einen Hohlraum einer Brennkammer der Gasturbine auf.

Fig. 4 zeigt ein Luftfahrzeug 401 gemäß einem Ausführungsbeispiel der Erfindung. Das Luftfahrzeug 401 weist eine erste Turbine 101 sowie eine zweite Turbine 402 auf. Zur Unterstützung der Verbrennung in der Brennkammer 104 weist die erste Turbine eine Mikrowellenquelle 109 und die zweite Turbine 402 eine Mikrowellenquelle 403 auf. Weiterhin beinhaltet das Flugzeug ein Steuergerät 201 auf zur Steuerung der Mikrowellenquellen 109 sowie 402. Zum Ansteuern der Mikrowellenquellen 109 und 402 ist das Steuergerät 201 durch eine erste Leitung 205 mit der Mikrowellenquelle 109 verbunden und durch eine zweite Leitung 404 mit der Mikrowellenquelle 403 verbunden.

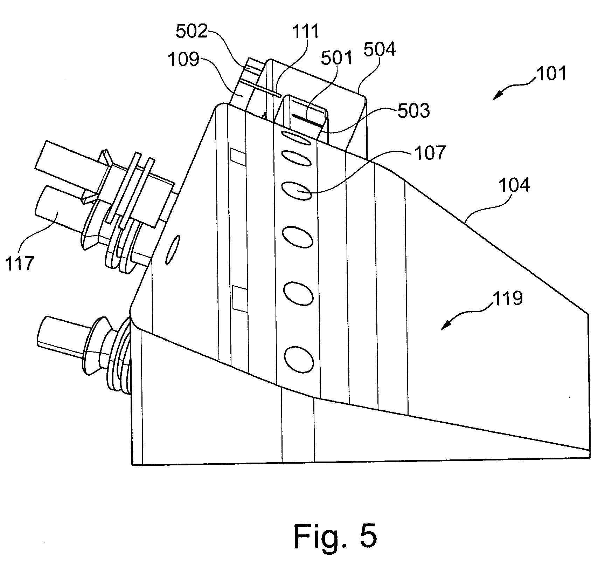

Fig. 5, 6 und 7 zeigen verschiedene Ausschnitte eines Teils einer Gasturbine 101 gemäß der Erfindung. Fig. 5 zeigt eine Brennkammer 104 mit einem Hohlraum 119. Die Brennkammer 104 ist ringförmig um eine Rotationsachse bzw. einer Antriebswelle angeordnet, welche sich unterhalb des sichtbaren Bildbereichs befinden. Weiterhin sind an der Brennkammer 104 Zündkerzen 117 angebracht. Von der Rotationsachse aus gesehen außerhalb der Gasturbine bzw. der Brennkammer 104 ist eine erste Mikrowellenquelle 109 an der Brennkammer 104 angebracht.

Die erste Mikrowellenquelle 109 weist einen Kurzschlussschalter 502 auf. Weiter ist die erste Mikrowellenquelle 109 mit einer Antenne 111 verbunden, welche in eine erste Kammer 504 hinein ragt. Die erste Kammer 504 ist von der Rotationsachse aus gesehen außerhalb der Brennkammer 104 an der Brennkammer 104 angebracht. Innerhalb der ersten Kammer 504 befindet sich eine zweite Kammer 503, welche an der Brennkammer 104 angebracht ist. An einer Grenzfläche zwischen der Brennkammer 104 und der zweiten Kammer 503 sind mehrere mikrowellendurchläßige Fenster 107 angebracht. Weiterhin weist die zweite Kammer eine Mehrzahl an Schlitzen 501 auf, welche gegenüber der mikrowellendurchläßigen Fenster 107 angeordnet sind.

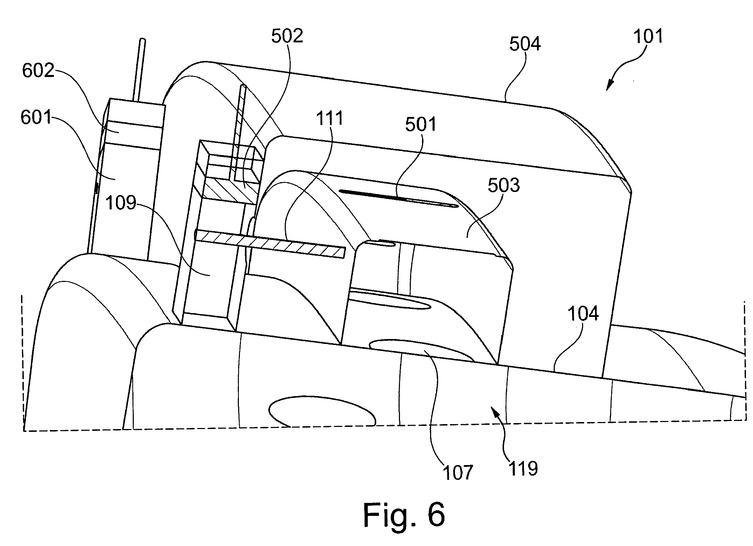

Fig. 6 zeigt einen vergrößerten Ausschnitt der Gasturbine 101, in welchem die erste Kammer 504 und die zweite Kammer 503 gezeigt sind. Weiter ist in Fig. 6 zu sehen, dass eine zweite Mikrowellenquelle 601 auf einem Kreis um die Rotationsachse der Antriebswelle an der Brennkammer 104 angeordnet ist. Die zweite Mikrowellenquelle weist ebenfalls einen Kurzschlussschalter 602 sowie eine Antenne auf, welche in diesem Ausschnitt nicht gezeigt ist.

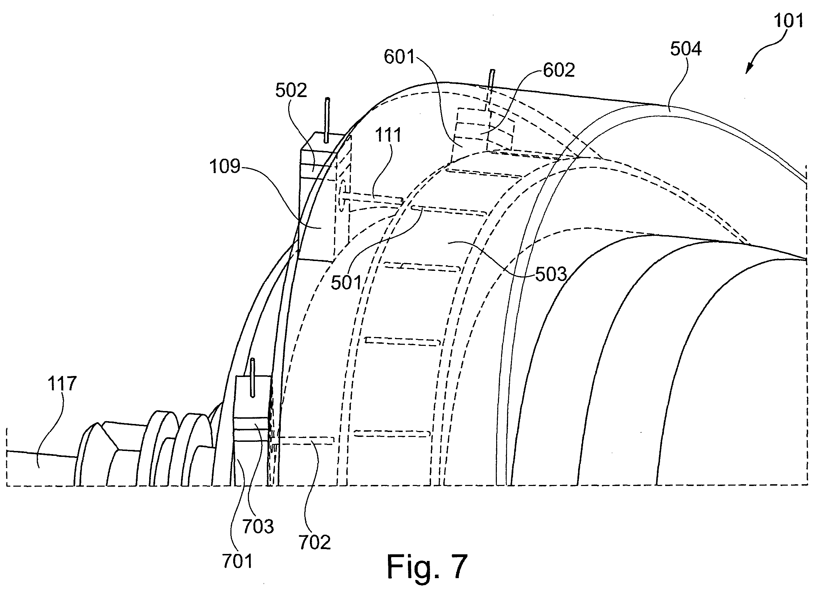

In Fig. 7 ist ein Ausschnitt der Gasturbine 101 gezeigt, wobei die erste Kammer 504 halbtransparent dargestellt ist. Innerhalb der ersten Kammer 504 befindet sich die zweite Kammer 503. Weiter sind auf der zweiten Kammer 503 Schlitze 501 angebracht, welche ringförmig um die Rotationsachse der Antriebswelle angeordnet sind.

Weiter ist die erste Mikrowelenquelle 109, die zweite Mikrowellenquelle 601 und eine dritte Mikrowellenquelle 701 gezeigt, welche ringförmig um eine Rotationsachse der Antriebswelle angeordnet sind. Die dritte Mikrowellenquelle 701 weist ebenfalls eine Antenne 702 sowie einen Kurzschlussschalter 703 auf.

Ergänzend sei darauf hinzuweisen, dass "umfassend" oder "aufweisend" keine anderen Elemente ausschließt und "ein" oder "eine" keine Vielzahl ausschließt. Ferner sei darauf hingewiesen, dass Merkmale, die mit Verweis auf eines der obigen Ausführungsbeispiele oder Ausführungsformen beschrieben worden sind, auch in Kombination mit anderen Merkmalen anderer oben beschriebener Ausführungsbeispiele oder Ausführungsformen verwendet werden können. Bezugszeichen in den Ansprüchen sind nicht als Einschränkungen anzusehen.

## Patentansprüche

1. Gasturbine (101), aufweisend:
eine ringförmig um eine Rotationsachse der Gasturbine angeordnete Brennkammer (104) mit einem Hohlraum (119) zum Aufnehmen und Verbrennen eines Kraftstoff Luft-Gemisches;
eine Mikrowellenquelle (109) mit einer Antenne (111) zum Erzeugen von Mikrowellenstrahlung;
eine von der Rotationsachse aus gesehen außerhalb der Brennkammer an die Brennkammer angeordnete erste Kammer (504);
eine innerhalb der ersten Kammer angeordnete zweite Kammer (503), welche an der Brennkammer (104) angebracht ist;
wobei die Mikrowellenquelle außerhalb der Brennkammer angebracht ist und die Antenne (111) in die erste Kammer hinein ragt (504); und
wobei die Gasturbine dazu ausgeführt ist, die Mikrowellenstrahlung in den Hohlraum der Brennkammer zu leiten, um die Verbrennung des Kraftstoff-Luft-Gemisches in der Brennkammer zu unterstützen,
wobei an einer Grenzfläche zwischen der Brennkammer (104) und der zweiten Kammer (503) eine Mehrzahl an mikrowellendurchläßigen Fenstern (107) angebracht sind, wobei die zweite Kammer eine Mehrzahl an Schlitzen (501) aufweist, welche gegenüber der Mehrzahl an mikrowellendurchläßigen Fenstern (107) angeordnet sind.

2. Gasturbine nach Anspruch 1, weiter aufweisend:
einen Hohlleiter (112) zum Leiten der Mikrowellenstrahlung von der Mikrowellenquelle an die Brennkammer.

3. Gasturbine nach einem der vorangehenden Ansprüche,
wobei die Gasturbine eine Mehrzahl an Mikrowellenquellen aufweist, welche ringförmig um eine Rotationsachse der Gasturbine angeordnet sind.

4. Gasturbine nach einem der vorangehenden Ansprüche,
wobei die Mikrowellenquelle zum Erzeugen einer Mikrowellenstrahlung mit einer Frequenz zwischen 1 und 100 GHz ausgeführt ist.

5. Gasturbine nach einem der vorangehenden Ansprüche,
wobei die Mikrowellenquelle zum Erzeugen einer gepulsten Mikrowellenstrahlung ausgeführt ist.

6. Gasturbine nach einem der vorangehenden Ansprüche,
wobei die Gasturbine eine Fluggasturbine ist.

7. Luftfahrzeug (401) mit einer Gasturbine nach einem der vorangehenden Ansprüche.

## Claims

1. Gas turbine (101), comprising:
an annular combustion chamber (104) that is arranged around an axis of rotation of the gas turbine, said combustion chamber having a hollow chamber (119) for receiving and combusting a fuel-air mixture,
a microwave source (109) having an antenna (111) for generating microwave radiation,
a first chamber (504) that is arranged on the combustion chamber outside the combustion chamber when viewed from the axis of rotation,
a second chamber (503) that is arranged within the first chamber, said second chamber being attached to the combustion chamber (104),
wherein the microwave source is attached outside the combustion chamber and the antenna (111) protrudes into the first chamber (504), and
wherein the gas turbine is embodied for the purpose of guiding the microwave radiation into the hollow chamber of the combustion chamber in order to support the combustion of the fuel-air mixture in the combustion chamber,
wherein a plurality of microwave-permeable windows (107) are attached to a delimiting surface between the combustion chamber (104) and the second chamber (503),
wherein the second chamber comprises a plurality of slots (501) that are arranged opposite the plurality of microwave-permeable windows (107).

2. Gas turbine according to Claim 1, further comprising:
a hollow guide (112) for guiding the microwave radiation from the microwave source to the combustion chamber.

3. Gas turbine according to any one of the preceding claims, wherein the gas turbine comprises a plurality of microwave sources that are arranged in an annular manner around an axis of rotation of the gas turbine.

4. Gas turbine according to any one of the preceding claims, wherein the microwave source is embodied so as to generate a microwave radiation at a frequency between 1 and 100 GHz.

5. Gas turbine according to any one of the preceding claims, wherein the microwave source is embodied so as to generate a pulsed microwave radiation.

6. Gas turbine according to any one of the preceding claims, wherein the gas turbine is an aircraft gas turbine.

7. Aircraft (401) having a gas turbine according to any one of the preceding claims.

## Revendications

1. Turbine à gaz (101) présentant :
une chambre à combustion (104) disposée de manière annulaire autour d'un axe de rotation de la turbine à gaz, comportant un espace creux (119) destiné à recevoir et à brûler un mélange carburant-air ;
une source de microondes (109) comportant une antenne (111) destinée à générer un rayonnement de microondes ;
une première chambre (504) disposée sur la chambre à combustion, à l'extérieur de la chambre à combustion en vue depuis l'axe de rotation ;
une deuxième chambre (503) disposée à l'intérieur de la première chambre, laquelle est rapportée sur la chambre à combustion (104) ;
dans laquelle la source de microondes est rapportée à l'extérieur de la chambre à combustion et dans laquelle l'antenne dépasse dans la première chambre (504) ; et
dans laquelle la turbine à gaz est réalisée pour guider le rayonnement de microondes dans l'espace creux de la chambre à combustion afin de soutenir la combustion du mélange carburant-air dans la chambre à combustion,
dans laquelle une pluralité de fenêtres (107) perméables aux microondes sont rapportées sur une surface limite entre la chambre à combustion (104) et la deuxième chambre (503), dans laquelle la deuxième chambre présente une pluralité de fentes (501) lesquelles sont disposées en face de la pluralité de fenêtres (107) perméables aux microondes.

2. Turbine à gaz selon la revendication 1, présentant en outre :
un conducteur creux (112) destiné à guider le rayonnement de microondes de la source de microondes à la chambre à combustion.

3. Turbine à gaz selon l'une quelconque des revendications précédentes,
laquelle turbine à gaz présentant une pluralité de sources de microondes lesquelles sont disposées de manière annulaire autour d'un axe de rotation de la turbine à gaz.

4. Turbine à gaz selon l'une quelconque des revendications précédentes,
dans laquelle la source de microondes est réalisée pour générer un rayonnement de microondes avec une fréquence comprise entre 1 et 100 GHz.

5. Turbine à gaz selon l'une quelconque des revendications précédentes,
dans laquelle turbine à gaz la source de microondes est réalisée pour générer un rayonnement de microondes pulsé.

6. Turbine à gaz selon l'une quelconque des revendications précédentes,
laquelle turbine à gaz étant une turbine à gaz volatile.

7. Aéronef (401) comportant une turbine à gaz selon l'une quelconque des revendications précédentes.
